Europäisches Patentamt

European Patent Office

Office européen des brevets

(19)

(11) Veröffentlichungsnummer: **0 067 245**
**A1**

(12) **EUROPÄISCHE PATENTANMELDUNG**

(21) Anmeldenummer: **81109268.3**

(22) Anmeldetag: **29.10.81**

(51) Int. Cl.³: **H 04 Q 11/04**

(30) Priorität: **04.06.81 DE 3122275**

(43) Veröffentlichungstag der Anmeldung:
**22.12.82 Patentblatt 82/51**

(84) Benannte Vertragsstaaten:
**AT CH FR GB IT LI NL SE**

(71) Anmelder: **SIEMENS AKTIENGESELLSCHAFT Berlin
und München
Postfach 22 02 61
D-8000 München 22(DE)**

(72) Erfinder: **Waas, Oskar Günther, Dipl.-Ing.
Im Strähler 40
CH-8047 Zürich(CH)**

(54) Schaltungsanordnung für Zeitmultiplex-Fernmeldevermittlungsanlagen, insbesondere PCM-Fernsprechvermittlungsanlagen, mit Zeitmultiplexleitungen, deren Zeitkanäle teils für Nachrichtenverbindungen und teils zur Übertragung von Signalisierungsinformationen dienen.

(57) An einen Ausgang (d) eines Raumlagen-Zeitlagen-Vielfaches (A) ist ein zusätzliches Zeitlagenvielfach (B) mit seinem Eingang (b1) angeschlossen, dessen Ausgang (b2) an einen Eingang (g) des Raumlagen-Zeitlagen-Vielfaches (A) angeschlossen ist. Das zusätzliche Zeitlagenvielfach (B) arbeitet mit einem Umlaufzyklus, der einem Überpulsrahmen entspricht. Es dient der Vermittlung der Signalisierungs-Teilinformationen.

EP 0 067 245 A1

0067245

SIEMENS AKTIENGESELLSCHAFT       Unser Zeichen

Berlin und München               VPA    81 P 6 2 4 5 E

Schaltungsanordnung für Zeitmultiplex-Fernmeldevermittlungsanlagen, insbesondere PCM-Fernsprechvermittlungsanlagen, mit Zeitmultiplexleitungen, deren Zeitkanäle teils für Nachrichtenverbindungen und teils
zur Übertragung von Signalisierungsinformationen dienen

Die Erfindung betrifft eine Schaltungsanordnung für Zeit-
multiplex-Fernmeldevermittlungsanlagen, insbesondere
PCM-Fernsprechvermittlungsanlagen, mit Zeitmultiplexleitungen, auf denen jeweils eine Mehrzahl von Zeitkanälen ein Zeitmultiplex bilden, und auf denen den
Zeitkanälen unterschiedliche, sukzessive aufeinanderfolgende Zeitlagen zugeordnet sind, und auf denen die
Zeitlagen in Pulsrahmen geordnet sind, und auf denen
jedem einzelnen der Zeitkanäle in den verschiedenen
aufeinanderfolgenden Pulsrahmen jeweils die gleiche
Zeitlage zugeordnet ist, und mit Raumlagen-Zeitlagen-
Vielfachen, über die Zeitkanäle auf eingangsseitig
angeschlossenen Zeitmultiplexleitungen einzeln mit
Zeitkanälen auf ausgangsseitig angeschlossenen Zeitmultiplexleitungen vermittelbar sind, und mit je einem
pro Zeitmultiplex vorgesehenen und als einer von dessen
Zeitkanälen zur Übertragung von einzeln den übrigen
Zeitkanälen zugeordneten Schaltkennzeichen dienenden
Signalkanal, dessen Zeitlagen über eine Mehrzahl von
Pulsrahmen hinweg zu ebenso wie die Pulsrahmen sukzessive aufeinanderfolgenden Überpulsrahmen zusammengefasst sind, innerhalb von welchen den übrigen Zeitkanälen, die verbindungsindividuell als Nachrichtenkanäle dienen, Zeitlagen innerhalb des Überpulsrahmens
zugeordnet sind.

Hes 1 MSt/27.04.1981

In zeitmultiplex-Fernmeldeanlagen, z.B. wie sie in der Zeitschrift "telcom report"4.Jahrgang/1981/Beiheft) beschrieben sind, ist für eine Mehrzahl von Zeitkanälen, z.B. für 30 Zeitkanäle, je ein gemeinsamer Signalkanal vorgesehen. Dieser dient zur Übertragung von Signalisierungsinformationen einzeln in Zuordnung für jeden der übrigen (30) Zeitkanäle, die als Nachrichtenkanäle für die Herstellung einzelner Verbindungen individuell und wahlfrei in Anspruch genommen werden können.

Die über eine Zeitmultiplexleitung übertragenen und den Zeitkanälen individuell entsprechenden Teilinformationen sind in ganz allgemein bekannter Weise in Pulsrahmen geordnet. Ein Pulsrahmen umfasst immer eine Reihe von Teilinformationen, von denen je eine je einem Zeitkanal zugeordnet ist. Eine der Teilinformationen ist dem Signalkanal zugeordnet. Da die dem Signalkanal innerhalb eines einzigen Pulsrahmens zugeordnete Teilinformation nicht ausreichen würde, um für die als Nachrichtenkanäle dienenden übrigen Zeitkanäle der betreffenden Zeitmultiplexleitung diesen Nachrichtenkanälen individuelle Schaltkennzeichen zu signalisieren (vgl. DE-PS 1 910 974), sind die dem Signalkanal entsprechenden Teilinformationen über mehrere Pulsrahmen hinweg zu Überpulsrahmen zusammengefasst, innerhalb derer die zeitliche Lage, also die

0067245

zeitliche Relation zum jeweiligen Beginn eines jeden Überpulsrahmens, die Zuordnung einer Teilinformation individuell zu einem der als Nachrichtenkanäle verwendeten übrigen Zeitkanäle angibt. Dabei kann die dem Signalkanal zugeordnete Teilinformation innerhalb jeweils eines Pulsrahmens je einem der übrigen oder auch je zwei oder mehreren der als Nachrichtenkanäle verwendeten übrigen Zeitkanäle der betreffenden Zeitmultiplexleitung zugeordnet sein, oder es kann die Teilinformation innerhalb zweier oder mehrerer aufeinanderfolgender Pulsrahmen je einem der übrigen Zeitkanäle zugeordnet sein. Üblicherweise ist die innerhalb eines einzigen Pulsrahmens liegende, dem Signalkanal zugeordnete Teilinformation jeweils in zwei Teile je gleicher Anzahl von Bits unterteilt, von denen je einer einem der übrigen, also als Nachrichtenkanäle dienenden Zeitkanäle individuell zugeordnet ist.

In Zeitmultiplex-Fernsprechvermittlungsanlagen (siehe z.B. die genannte Zeitschrift "telcom report") ist es üblich, die den Zeitkanälen jeder der Zeitmultiplexleitungen zugeordneten, der Signalisierung von Schaltkennzeichen dienenden Signalisierungsteilinformationen mit Hilfe einer dezentralen Steuereinrichtung einer Anschlussgruppe (LTG) aufzunehmen (gleiches gilt für Analog-Verbindungsleitungen und für Analog-Teilnehmerleitungen) und einem zentralen Steuerwerk zuzuleiten. Dieses verarbeitet die Signalisierungsteilinformationen und führt sie gezielt den dezentralen Steuereinrichtungen von denjenigen Anschlussgruppen zu, über die die Verbindungen weitervermittelt wurden, die über die der genannten Zeitmultiplexleitung angehörenden Zeitkanäle verlaufen.

Um nun die erhebliche Steuerwerksbelastung, die sich aus der blossen Schaltkennzeichenweitergabe mittels Signalisierungsteilinformationen ergibt, die von den Anschlussgruppen immer dem der Signalisierung von Schaltkennzeichen dienenden Zeitkanal jeder der Zeitmultiplexleitungen entnommen und danach wieder jedem dieser Zeitkanäle gemäss den Vermittlungsdaten jeder einzelnen sämtlicher durchgeschalteter Verbindungen zuzuführen sind, wesentlich herabzusetzen, wurde gemäss der DE-PS 1 910 974 eine Anordnung geschaffen, die zur Vermittlung von der Signalisierung von Schaltkennzeichen dienenden Teilinformationen aus einem Koppelfeld zur Durchschaltung von Nachrichtenverbindungen ("Verbindungskoppelfeld") zusätzlich ein weiteres Koppelfeld ("Signalkoppelfeld") zur Durchschaltung solcher Verbindungen vorsieht, über das die den Nachrichtenverbindungen entsprechenden und der Signalisierung von Schaltkennzeichen dienenden Teilinformationen vermittelbar sind. Diese Schaltungsanordnung geht davon aus, dass jede dieser Teilinformationen mit je einer Zuordnungsinformation versehen ist, die die Zuordnung zum jeweiligen Nachrichtenzeitkanal angibt.

Im Unterschied zu der durch die genannte Patentschrift bekannten Anordnung geht die Erfindung davon aus, dass eine Zordnungsinformation der zuvor erwähnten Art nicht vorgesehen zu sein braucht, und dass diese Zuordnung - wie oben bereits erwähnt - aus der zeitlichen Relation zum jeweiligen Beginn eines jeden Überpulsrahmens resultiert. Diese Voraussetzung, die also auf einem vorteilhaften Wegfall der genannten besonderen Zuordnungsinformation beruht, macht es erforderlich, die Vermittlung der der Signalisierung von Schaltkennzeichen dienenden Teilinformationen auf andere Weise zu ermöglichen.

Für die Erfindung besteht deshalb die Aufgabe, in einer

0067245

Schaltungsanordnung der eingangs angegebenen Art eine Vermittlung von der Signalisierung von Schaltkennzeichen dienenden und hierzu individuell den Nachrichtenkanälen zugeordneten Teilinformationen unter der Voraussetzung zu ermöglichen, dass diesen Teilinformationen keine eine. solche Zuordnung angebenden Zusatzinformationen beigefügt sind. Dies soll in an sich bekannter Weise (vgl. die genannte Patentschrift) dem Zweck der Entlastung des zentralen Steuerwerks und der dezentralen Steuereinrichtungen von der Aufgabe der Schaltkennzeichenweitergabe dienen.

Diese Aufgabe wird erfindungsgemäss dadurch gelöst, dass an einen Zeitmultiplexausgang des Raumlagen-Zeitlagen-Vielfaches ein Zeitlagenvielfach mit seinem Eingang und dessen Ausgang an einen Zeitmultiplexeingang des Raumlagen-Zeitlagen-Vielfaches angeschlossen sind, und dass die Schreibvorgänge und die Lesevorgänge, die beim Raumlagen-Zeitlagen-Vielfach jeweils der Pulsrahmendauer entsprechen, beim Zeitlagenvielfach jeweils einer Überpulsrahmendauer entsprechen, die ein Mehrfaches der Pulsrahmendauer beträgt, und dass über das Raumlagen-Zeitlagen-Vielfach zum Eingang und vom Ausgang des Zeitlagenvielfaches innerhalb von Pulsrahmen vermittelbare Signalkanal-Teilinformationen über das Zeitlagenvielfach innerhalb von Überpulsrahmen, also über ein Mehrfaches von Pulsrahmen hinweg, vermittelbar sind.

Die Erfindung schafft die Möglichkeit, die jedem der Nachrichtenkanäle zugehörigen Signalisierinformationen ebenfalls über ein Zeitmultiplexkoppelfeld durchzuschalten und zwar auch unter der Voraussetzung, dass die Signalisierinformationen keine zusätzlichen Zuordnungsinformationen aufweisen, die eine Zuordnung der jeweiligen Signalisierinformation zu einem der als Nachrichtenkanäle verwendeten übrigen Kanäle angeben würden. Dies hat besondere Bedeutung für sogenannte Standverbindungen; das sind über Kanäle, im vorliegenden Falle also Zeitmultiplexkanäle, durchgeschaltete Verbindungen, die über längere Zeit im durchgeschalteten Zustand bestehen bleiben, und zur Direktverbindung anderer Vermittlungsstellen miteinander dienen, und über die einzelne gewählte Verbindungen nacheinander aufgebaut und auch wieder ausgelöst werden, ohne dass die Steuerorgane der betreffenden Vermittlungsstelle, in der solche Standverbindungen durchgeschaltet sind, selbst etwas mit der Schaltkennzeichenweitergabe in der weiter oben erwähnten Weise zu tun haben.

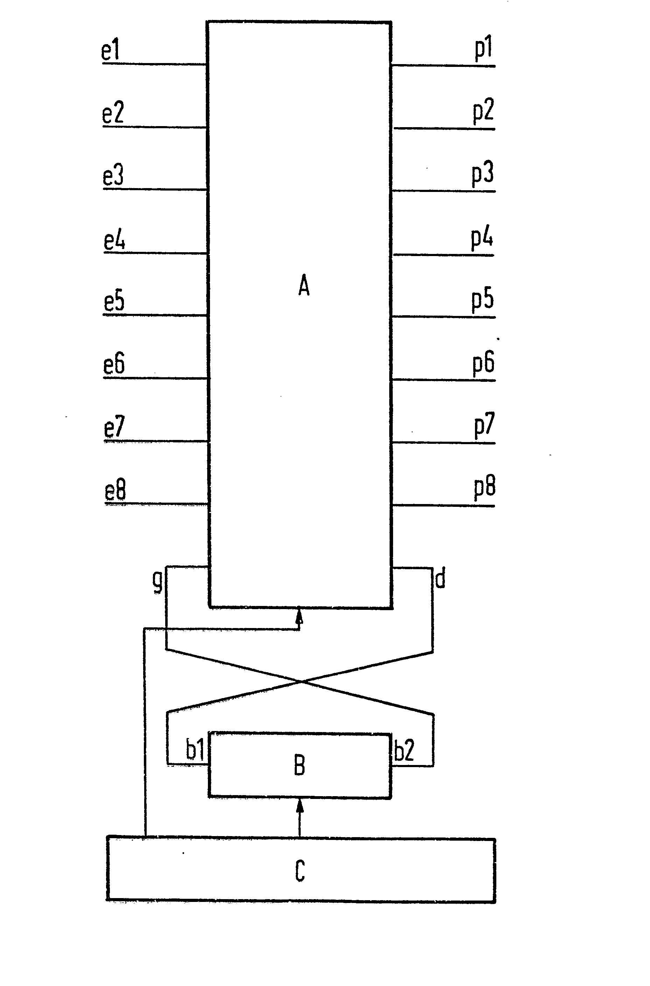

In der Zeichnung ist ein Ausführungsbeispiel der Erfindung nur in wesentlich zu ihrem Verständnis beitragenden Bestandteilen dargestellt. Die nachfolgende Beschreibung, die zunächst die allgemeinen Zusammenhänge und Funktionen des erfindungsgemässen Ausführungsbeispiels behandelt und erst weiter unten auf seine erfindungsgemässen Besonderheiten eingeht, setzt ein für PCM-Verbindungen ausgelegtes mehrstufiges Koppelfeld, das teils aus Zeitlagenvielfachen, teils aus Raumlagenvielfachen und teils aus kombinierten Raumlagen-Zeitlagen-Vielfachen aufgebaut ist, als für den Fachmann bereits vielfältig bekannt voraus; beispielsweise ist in der DE-AS 21 08 745, insbesondere FIG 1 nebst Beschreibung, ein derartiges Koppelfeld dargestellt und beschrieben.

In der Zeichnung ist z.a. ein Raumlagen-Zeitlagen-Vielfach A dargestellt. Ankommende Zeitmultiplexleitungen sind mit e1 bis e8 und abgehende Zeitmultiplexleitungen mit p1 bis p8 bezeichnet.

Das dargestellte Raumlagen-Zeitlagen-Vielfach A ist Bestandteil einer grösseren PCM-Zeitmultiplexkoppelanordnung. Zur Herstellung einer Verbindung wird in an
sich bekannter Weise mit Hilfe einer Wegesucheinrichtung
ein freier Verbindungsweg gesucht und ausgewählt, der
über freie Verbindungskanäle der Zeitmultiplexleitungen
e1 bis e8 und p1 bis p8 aufgebaut werden kann. Im Zusammenhang hiermit sind auch Haltespeicher vorgesehen.

Die Haltespeicher dienen zur Speicherung von Vermittlungsdaten, die die Zuordnung abgehender Zeitkanäle
zu ankommenden Zeitkanälen jeweils innerhalb eines
der genannten Vielfache angeben. Diese Zuordnung entspricht den Durchschaltedaten für jeweils eine Verbindung in einem Raumkoppelvielfach konventioneller Art
(Eingangskoordinatenleitungsnummer/Ausgangskoordinatenleitungsnummer).

Vermittlungsdaten werden bekanntlich mit Hilfe einer
Wegesucheinrichtung jeweils für eine Verbindung anhand
von in einem Belegungsspeicher (in Anlagen älterer Bauart: Wegesuchnetzwerk) gespeicherten Daten über den Zustand (frei oder belegt) aller massgeblichen Teile des
Koppelfeldes, hauptsächlich der Zwischenleitungen,
durch informationsverarbeitende Verknüpfungsvorgänge
ermittelt. Diese Vermittlungsdaten geben eindeutig den
Verlauf einer über das mehrstufige Koppelfeld durchzuschaltenden und durchgeschalteten Verbindung hinsichtlich der dabei in Anspruch genommenen Zwischenleitungen
und Koppelpunkte bzw. Zeitmultiplexleitungen, Zeitkanäle, Zeitlagen usw. an. Auch im vorliegenden Falle
finden solche Wegesuchvorgänge für jede durchzuschaltende Verbindung statt. Handelt es sich dabei anstatt
um eine Einkanalverbindung um eine Mehrkanalverbindung,
so können mehrere solcher Wegesuchvorgänge einzeln für
die dabei erforderlichen mehreren Verbindungsherstellungsvorgänge durchgeführt werden.

Die mittels Wegesuchvorgängen ermittelten Vermittlungsdaten werden - soweit sie eine über die betreffende Zeitmultiplexkoppelanordnung führende Verbindung betreffen - in nichtgezeigten Haltespeichern der genannten Vielfache gespeichert. Bei den Zeitlagenvielfachen z.B. sind den Kanalnummern der abgehenden Zeitkanäle die Speicherplätze des jeweils zugeordneten Haltespeichers bleibend zugeordnet. Die über die ankommenden Zeitkanäle einer PCM-Zeitmultiplexleitung pro Pulsrahmen eintreffenden verbindungsindividuellen Teilinformationen werden in diesem Falle zyklisch in den dem betreffenden Zeitlagenvielfach jeweils zugeordneten Vollspeicher      eingeschrieben. Im Gegensatz hierzu erfolgt der Lesebetrieb, der einer Weitergabe dieser Teilinformationen einzeln über die abgehenden Zeitkanäle dient, gemäss den Vermittlungsdaten, die die Zuordnung der abgehenden Zeitkanäle zu den ankommenden Zeitkanälen angeben und pro abgehenden Zeitkanal auf Speicherplätzen eines Haltespeichers in Form von Speicherplatzadressen der Vollspeicher gespeichert sind. In einem Haltespeicher ist also pro abgehenden Zeitkanal auf einem jeweils diesem bleibend zugeordneten Speicherplatz angegeben, unter welcher Vollspeicher-Speicherplatzadresse die über diesen Zeitkanal weiterzugebende Teilinformation eingeschrieben, dh. zwischengespeichert ist.

Bei Raumlagenvielfachen erfolgt eine Durchschaltung von Kanälen nur gleicher Zeitlagen. Mittels Raumlagenvielfachen sind also Kanäle von mehreren eingangsseitigen Zeitmultiplexleitungen einzeln auf Kanäle mehrerer ausgangsseitiger Zeitmultiplexleitungen durchschaltbar. Es sind jedoch nur zeitlagengleiche Kanäle miteinander verbindbar. Jede Verbindung besteht nur während der Dauer des durch die Zeitlage der beiden miteinander verbundenen Kanäle bestimmten Zeitschlitzes. Über gleiche Koppelpunktschalter sind also je mehrere Verbindungen schaltbar, die zeitlagenmässig alle voneinander verschieden sind.

Demgegenüber gibt es auch kombinierte Raumlagen-Zeitlagen-Vielfache. An diese sind sowohl eingangsseitig als auch ausgangsseitig je mehrere Zeitmultiplexleitungen angeschlossen, wie es für das dargestellte Raumlagen-Zeitlagen-Vielfach A gezeigt ist. Jeder Kanal auf jeder der eingangsseitigen Zeitmultiplexleitungen e1 bis e8 ist mit jedem Kanal auf jeder der ausgangsseitigen Zeitmultiplexleitungen p1 bis p8 vermittelbar. Ausser einer Durchschaltung mit zeitlagenmässiger Umsetzung ist also eine räumlich differenzierte Durchschaltung möglich. Raumlagen-Zeitlagen-Vielfache sind an sich bekannt und brauchen deshalb hier nicht mehr im einzelnen beschrieben zu werden. Es wird auf die DE-OS 24 44 854 und auf "Communications présentées au COLLOQUE INTERNATIONAL de COMMUTATION ÉLECTRONIQUE", (Paris 28.März-2.April 1966), herausgegeben von ÉDITIONS CHIRON, 40, rue de Seine, Paris-6[e], hingewiesen.

Nachdem die Beschreibung bisher in allgemeinerer Weise die Zusammenhänge und Funktionen des erfindungsgemässen Ausführungsbeispieles behandelt hat, geht sie nun vermehrt auf seine erfindungsgemässen Besonderheiten ein.

Im ORANGE BOOK, VOLUME III-2, Empfehlung Rec.G.732 (LINE TRANSMISSION/ 4. Signalling, Seiten 429ff) der SIXTH PLENARY ASSEMBLY (27.9.-8.10.1976) des INTERNATIONAL TELEGRAPH AND TELEPHONE CONSULTATIVE COMMITTEE (CCITT) ist ein PCM-Zeitmultiplexsystem beschrieben, in dem auf einer Zeitmultiplexleitung 32 Kanäle durch Zeitvielfachteilung gebildet sind. Ein Kanal (Kanal 0) dient u.a. zur Übertragung eines Rahmenkennungszeichens, wodurch die Zeitlage der Pulsrahmengrenzen angegeben wird. Ein weiterer Kanal (Kanal 16 = Signalisierkanal) dient zur Übertragung von Signalisierinformation für alle übrigen 30 Kanäle, die als Nachrichtenkanäle verwendbar und hierzu bei Herstellung individueller Verbindungen einzeln und wahlfrei in an sich bekannter Weise belegbar sind. Signalisierinformationen dienen in an sich bekannter Weise zur Kennzeichnung des Anfangs und des Endes von Schaltkennzeichen, z.B. Wahlendekennzeichen, Beginnzeichen, Schlusszeichen, Zählimpulsen und dergleichen, die in Zusammenhang einer jeweils aufgebauten Verbindung ausser der eigentlichen Nachrichteninformation zu übertragen sind.

Die pro Kanal und pro Pulsrahmen übertragbaren Teilinformationen werden auch als "Worte" bezeichnet. Ein Wort umfasst immer eine Folge von 8 bit pro Kanal und pro Pulsrahmen.

Da nun 8 bit zur Signalisierung von Schaltkennzeichen für die als Nachrichtenkanäle verwendbaren 30 genannten Kanäle nicht ausreichen würden, sind die Worte jeweils der sechzehnten Zeitlage von insgesamt 16 aufeinanderfolgenden Pulsrahmen zu einem Überpulsrahmen zusammengefasst. Eines dieser Worte dient u.a. zur Kennzeichnung der Zeitlage der Überpulsrahmengrenzen. Von den übrigen 15 Worten des Signalisierkanales dient je eines zur Signalisierung für zwei Nachrichtenkanäle. Jedes dieser Worte besteht aus 8 bit. Die ersten vier bit - auch als "Halbwort" bezeichnet - sind immer einem Nachrichtenkanal und die weiteren vier bit - ebenfalls als "Halbwort" bezeichnet - eines Wortes sind einem weiteren Nachrichtenkanal fest zugeordnet. Folglich ergibt sich die Zuordnung eines jeden Halb-

0067245

wortes zu einem Nachrichtenkanal einerseits aus der
Zeitlage des betreffenden Wortes im Signalisierkanal
in Relation zu dessen Überpulsrahmengrenzen und andererseits daraus, ob das betreffende Halbwort innerhalb
dieses Wortes an erster oder an zweiter Stelle steht.
Diese Zuordnung ist also generell festgelegt und bedarf keiner Zuordnungsinformation, wie es in der
DE-PS 19 10 974 beschrieben wird.

Von den über den Signalkanal einer Zeitmultiplexleitung
übertragenen PCM-Worten dient das erste innerhalb eines
Überpulsrahmens u.a. zur Übertragung des Überpulsrahmenkennungswortes. Das zweite dieser PCM-Worte umfasst
die beiden der Signalisierung von Schaltkennzeichen
dienenden Halbworte, die zwei ersten der als Nachrichtenkanäle (z.B. Kanäle 1 und 17) dienenden übrigen Zeitkanäle zugeordnet sind. Entsprechendes gilt für die
weiteren über den Signalkanal übetragenen PCM-Worte.

Jede der eingangsseitig an das Raumlagen-Zeitlagen-Vielfach A angeschlossenen Zeitmultiplexleitungen führt
einen Signalkanal mit der Zeitlage 16. Das gleiche gilt
für die ausgangsseitig angeschlossenen Zeitmultiplexleitungen p1 bis p8. Ausserdem ist an das Raumlagen-
Zeitlagen-Vielfach A, das im weiteren Text immer nur
als "Vielfach A" bezeichnet wird, eine Zeitmultiplex-
Zwischenleitung d angeschlossen, über die ein Zeitlagenvielfach B, künftig als "Vielfach B" bezeichnet, mit
seinem Eingang b1 angeschlossen ist. Der Ausgang b2
dieses Vielfaches B ist über eine weitere Zeitmultiplex-
zwischenleitung g an einen Zeitmultiplexeingang des
Vielfaches A angeschlossen.

Über das Vielfach A ist der jeweilige Signalkanal jeder
der eingangsseitigen Zeitmultiplexleitungen e1 bis e8 zu einem Kanal der Zeitmultiplex-Zwischenleitung d, ferner nur als "Zwischenleitung d" bezeichnet, vermittelbar. Gleiches gilt für die Kanäle der Zeitmultiplex-Zwischenleitung g, ferner nur als "Zwischenleitung g" bezeichnet, die mit dem jeweiligen Signalkanal einer jeden der ausgangsseitigen Zeitmultiplexleitungen p1 bis p8 vermittelbar sind. Dabei sind die Signalkanäle also aus ihrer Signalkanal-Zeitlage 16 umsetzbar in jede andere Zeitlage und umgekehrt. Folglich sind also alle Signalkanäle der Zeitmultiplexleitungen e1 bis e8 in von Signalkanal zu Signalkanal unterschiedlichen Zeitlagen über das Vielfach B zu allen Signalkanälen der Zeitmultiplexleitungen p1 bis p8 vermittelbar, obwohl diese Signalkanäle von Haus aus sämtlich die gleiche Signalkanalzeitlage 16 haben.

An dieser Stelle ist auf die Unterteilung der pro Pulsrahmen in der Signalkanalzeitlage übertragenen Teilinformation von 8 bit in zwei Halbworte von je 4 bit zurückzukommen. Wie oben ausgeführt, ist immer ein solches Halbwort einem der übrigen, als Nachrichtenkanäle dienenden Zeitmultiplexkanäle auf jeder der Zeitmultiplexleitungen zum Zweck der Signalisierung von Schaltkennzeichen individuell zugeordnet. Folglich geht es bei den vermittlungstechnischen Zuordnungen innerhalb des Vielfaches B immer um eine Vermittlung von Halbworten.

Jedes Halbwort ist hinsichtlich seiner Zeitlage durch insgesamt drei zeitliche Relationen bestimmt. Erstens ist die Zeitlage der Signalkanäle die Signalkanal-Zeitlage 16. Diese Zeitlage kann innerhalb des Vielfaches A für den ganzen Signalkanal einer Zeitmultiplexleitung gewechselt werden. Zweitens ist ein einem bestimmten Signalkanal zugeordnetes Halbwort durch seine Überpulsrahmen-Zeitlage bestimmt, also durch seine

0067245

zeitliche Relation zu der Überpulsrahmengrenze.
Drittens ist ein solches Halbwort durch seine
Position innerhalb der Überpulsrahmen-Zeitlage bestimmt.
Diese Position kann die erste Position und die zweite
Position sein. Gemeint ist damit, ob das betreffende
Halbwort aus den ersten oder den letzten vier bit
der acht bit umfassenden Teilinformation (= Wort)
besteht.

Auf die zuvor beschriebene Weise ist nun jedes der
Halbworte zeitlagenmässig definiert. Diese Halbworte
sind gleichsam die Elemente der über die Zwischenleitungen d und g zeitmultiplex übertragbaren Informationen. Folglich ist über das Vielfach B die der
Signalisierung von Schaltkennzeichen dienende, und
pro als Nachrichtenkanal dienenden Zeitmultiplexkanal innerhalb der Signalkanalzeitlage übertragene
Information, die aus diesen Nachrichtenkanälen individuell zugeordneten Halbworten sich zusammensetzt,
separat für jeden dieser Nachrichtenkanäle vermittelbar. Hierbei ist ein Zeitlagenwechsel innerhalb des
Vielfaches B hinsichtlich jeder der erwähnten drei
zeitlichen Bestimmungsgrössen für die jeweils einem
Nachrichtenkanal individuell zugeordneten Halbworte
möglich. Es kann also die Zeitlage hinsichtlich der
Pulsrahmengrenzen, hinsichtlich der Überpulsrahmengrenzen und hinsichtlich der erläuterten Position für
die einem Nachrichtenkanal individuell zugeordneten
Halbworte zwischen Eingang b1 und Ausgang b2 innerhalb
des Vielfaches B gewechselt werden. Dies geschieht in
für Zeitlagenvielfache an sich bekannter Weise.

Beim Vielfach A erfolgen die Schreibvorgänge und die
Lesevorgänge in Zyklen, die hinsichtlich ihrer jeweiligen Dauer in bekannter Weise gemäss den Pulsrahmen der Zeitmultiplexleitungen e1 bis e8 und p1 bis p8 ablaufen. Beim Vielfach B entsprechen die Zyklen der Schreibvorgänge und der Lesevorgänge hinsichtlich ihrer jeweiligen Dauer den Überpulsrahmen. Dadurch sind die individuell den Nachrichtenkanälen zugeordneten Halbworte der Signalkanal-Teilinformationen über die Vielfache A und B dank der besonderen Arbeitsweise des Vielfaches B innerhalb von Überpulsrahmen, also über ein Mehrfaches von Pulsrahmen hinweg, vermittelbar.

Mit Hilfe der anhand der Zeichnung beschriebenen Anordnung ist es möglich, die Signalisierinformation, die jedem der über jede der Zeitmultiplexleitungen e1 bis e8 übertragenen Kanäle zugeordnet ist, ebenso wie die diesen Kanälen zugeordneten Worte (Teilinformationen) zeitmultiplex zu jeder der Zeitmultiplexleitungen p1 bis p8 durchzuschalten. Die vermittlungstechnische Zuordnung erfolgt dabei jeweils pro Pulsrahmen für die der Nachrichtenübertragung dienenden Worte und pro Überpulsrahmen für die der Signalisierung dienenden Halbworte. Diese beiderlei vermittlungstechnischen Zuordnungen, und zwar einerseits der der Nachrichtenübertragung dienenden Kanäle zueinander und andererseits der der Signalisierung dienenden Halbworte innerhalb des Signalkanales, entsprechen einander. Deshalb ist auch eine gemeinsame Steuerung für die beiden Vielfache A und B vorgesehen, die aus den durch die Wegesuche ermittelten Vermittlungsdaten die für die Durchschaltung einer jeden Verbindung (Nachrichtenweg und Übertragungsweg für die Halbworte der jeweils individuell zugehörigen Signalisierinformation) erforderlichen Steuerinformationen für diese Vielfache liefert.

Mit Hilfe der Erfindung ist es möglich, die zuvor genannte zeitmultiplexe Durchschaltung der jedem der Nachrichtenkanäle zugeordneten Signalisierinformation (Halbworte) über das Zeitlagenvielfach B auf einen Teil der über das Raumlagen-Zeitlagen-Vielfach A durchgeschalteten Verbindungen zu beschränken, z.B. auf sogenannte "Standverbindungen" (s.o.!). Unter diesem Gesichtspunkt. kann das Zeitlagenvielfach B entsprechend schwach bemessen werden, d.h. der hierfür erforderliche zusätzliche Aufwand sehr in Grenzen gehalten werden.

4 Patentansprüche
1 Figur

Patentansprüche

1. Schaltungsanordnung für Zeitmultiplex-Fernmelde-vermittlungsanlagen, insbesondere PCM-Fernsprechver-mittlungsanlagen, mit Zeitmultiplexleitungen, auf denen jeweils eine Mehrzahl von Zeitkanälen ein Zeitmultiplex bilden, und auf denen den Zeitkanälen unterschied-liche, sukzessive aufeinanderfolgende Zeitlagen zuge-ordnet sind, und auf denen die Zeitlagen in Pulsrahmen geordnet sind, und auf denen jedem einzelnen der Zeitkanäle in den verschiedenen aufeinanderfolgenden Pulsrahmen jeweils die gleiche Zeitlage zugeordnet ist, und mit Raumlagen-Zeitlagen-Vielfachen, über die Zeitkanäle auf eingangsseitig angeschlossenen Zeitmultiplexleitungen einzeln mit Zeitkanälen auf ausgangsseitig angeschlossenen Zeitmultiplexleitungen vermittelbar sind, und mit je einem pro Zeitmultiplex vorgesehenen und als einer von dessen Zeitkanälen zur Übertragung von einzeln den übrigen Zeitkanälen zugeordneten Schaltkennzeichen dienenden Signalkanal, dessen Zeitlagen über eine Mehrzahl von Pulsrahmen hinweg zu ebenso wie die Pulsrahmen sukzessive aufeinanderfolgenden Überpulsrahmen zusammengefasst sind, innerhalb von welchen den übrigen Zeitkanälen, die verbindungsindividuell als Nachrichtenkanäle dienen, Zeitlagen innerhalb des Überpulsrahmens zugeordnet sind, d a d u r c h g e k e n n z e i c h n e t , dass an einen Zeitmulti-plexausgang des Raumlagen-Zeitlagen-Vielfaches ein Zeitlagenvielfach mit seinem Eingang und dessen Ausgang an einen Zeitmultiplexeingang des Raumlagen-Zeitlagen-Vielfaches angeschlossen sind, und dass die Schreibvorgänge und die Lesevorgänge, die beim Raumlagen-Zeitlagen-Vielfach jeweils der Pulsrahmendauer entsprechen, beim Zeitlagenvielfach jeweils einer Überpulsrahmendauer entsprechen, die ein Mehrfaches der Pulsrahmendauer beträgt, und dass über das Raumlagen-Zeitlagen-Vielfach zum Eingang und vom Ausgang des Zeitlagenvielfaches innerhalb von Pulsrahmen vermittelbare Signalkanal-Teilinformationen über das Zeitlagenvielfach innerhalb von Überpulsrahmen, also über ein
Mehrfaches von Pulsrahmen hinweg, vermittelbar sind.

2. Schaltungsanordnung nach Anspruch 1, d a d u r c h
g e k e n n z e i c h n e t , dass die Signalkanal-
Teilinformation innerhalb eines Pulsrahmens aus zwei
Teilen besteht, die zweien der übrigen, verbindungsindividuell als Nachrichtenkanäle dienenden Zeitkanälen einzeln zugeordnet sind, und dass jeder der
beiden Teile unabhängig vom anderen über das Zeitlagenvielfach vermittelbar ist.

3. Schaltungsanordnung nach Anspruch 1, d a d u r c h
g e k e n n z e i c h n e t , dass das Raumlagen-
Zeitlagen-Vielfach und das Zeitlagenvielfach aufgrund
ein und derselben Wegesuchergebnisse Vermittlungsdaten
von einer gemeinsamen Steuerung erhält.

4. Schaltungsanordnung nach Anspruch 1, d a d u r c h
g e k e n n z e i c h n e t , d a s s von den über
das Raumlagen-Zeitlagen-Vielfach durchgeschalteten
Verbindungen nur zum Teil die ihnen zugeordneten
Signalkanal-Teilinformationen über das Zeitlagenvielfach vermittelt sind und die übrigen mittels Teilteilzentraler Steuereinrichtungen weitergeleitet
werden.

### Europäisches Patentamt

## EUROPÄISCHER RECHERCHENBERICHT

Nummer der Anmeldung

EP 81 10 9268

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 907 867 (TELEFONBAU UND NORMALZEIT) * Seite 9, Zeile 27 - Seite 11, Zeile 32; Seite 13, Zeilen 3,4 * | 1,3,4 | H 04 Q 11/04 |
| Y | THE POST OFFICE ELECTRICAL ENIGNEERS' JOURNAL, Band 74, Heft 1, April 1981, Seiten 2-7, London, G.B. G.R. SMITH: "System X: Subsystems. Part 7 - The signalling interworking and analogue line terminating subsystems" * Seite 2, rechte Spalte, Zeilen 9-18; Seiten 2-5; Absatz "TS16A" * | 1,2 | |
| Y | COMMUTATION ET ELECTRONIQUE, Nr. 50, Juli 1975, Seiten 7-17, Paris, FR. M. REVEL et al.: "Brasseur de voies entre liaisons numériques TN 1" * Seiten 11-15, Absätze 4,5 * | 1-4 | **RECHERCHIERTE SACHGEBIETE (Int. Cl. ³)** H 04 Q 11/04 |

Der vorliegende Recherchenbericht wurde für alle Patentansprüche erstellt.

| Recherchenort DEN HAAG | Abschlußdatum der Recherche 08-09-1982 | Prüfer DE MUYT H.A. |
|---|---|---|